# EUROPEAN PATENT SPECIFICATION

(11) **EP 2 583 954 B1**
(45) Date of publication and mention of the grant of the patent: **15.03.2017**
(21) Application number: 12398005.4
(22) Date of filing: 16.10.2012
(51) Int. Cl.: C04B 28/04, C04B 18/24, C04B 111/40, C04B 111/52, C04B 111/28

(54) **Lightweight mortar prepared with cork granulate**
Leichtmörtel mit Kork-Granulat hergestellt
Mortier léger préparé avec des granulés de liège

(30) Priority: 17.10.2011 PT 10593711
(43) Date of publication of application: 24.04.2013
(73) Proprietor: Secil-Companhia Geral de Cal e Cimento S.A., 1600-079 Lisboa (PT)
(72) Inventor: de Sequeira Serra Nunes, Angela Maria Jesus, 2925-181 Azeitão (PT); Frade Jacinto, Dina Filipe, 2405-026 Maceira (PT)
(74) Representative: Pereira da Cruz, Joao

(56) References cited:
- EP-A1- 1 122 223
- EP-A1- 1 338 578
- AT-B- 243 666
- FR-A1- 2 633 610
- US-A1- 2005 241 542

## Description

### FIELD OF THE INVENTION

The present invention falls in the field of new eco-efficient building materials, particularly mortars with acoustic absorption properties, improved thermal performance and low density, with excellent adherence, resistant and easy to apply.

### BACKGROUND OF THE INVENTION

The factory-metered dry mortars used over the years are mortars very similar to those traditionally prepared on a work site. They consist of hydraulic binders and aggregates of silica or lime, which have densities in the range of 1600-1800 kg/m³, a poor thermal and acoustic performance, with serious pathologies regarding cracking and displacements of the support, responsible for much of the current damage in buildings.

French patent application FR2681856 discloses cellular mortars for acoustic insulation based on cork granulate, synthetic resin and a mineral material, bentonite for instance.

French patent application FR2942795 relates to mortars for thermal and acoustic insulation based on cork granulate, vegetable fibers, casein and clay.

The association of the information contained in the article of Silva L. M. et al: Role of lightweight fillers on the properties of amixed-binder mortar, Cement and concrete composites, vol. 32, No.1 (2010), pages 19-24, 2010-01-01 *Experimental -Mortar formulations,* in conjunction with the information contained in the article of Karade S.R.: Cement-bonded composites from lignocellulosic wastes, Construction and Building Materials, vol. 24, No.8, pages 1323 - 1330, 2010-08-01, *Paragraph 2.1.6,* leads to a product whose thermal, physical and mechanical performances are not the most appropriate, its application to work site being not possible because the properties regarding rheology do not permit to meet those requirements.

### DETAILED DESCRIPTION OF THE INVENTION

The present invention relates to a mortar which incorporates cork granulate from several possible sources throughout the process of the material's transformation (production of stoppers and black agglomerate board, aggregate preparation and cork recycling). This is a 100% natural aggregate which gives the mortar an exceptional reduction on its density, and a good thermal and acoustic performance.

Cork's exceptional characteristics give mortar a great durability and makes it easy to apply, said mortar also incorporates a selected combination of adjuvants so that it can be applied mechanically in a continuous way with great benefits in terms of adherence to the supports, particularly old supports, being quite adequate in the whole area of rehabilitation/renovation.

Being easy to apply makes it possible to obtain mortar thicknesses in the range of 20-100mm, as need be for the building in question.

This lightweight mortar combines ease of application by mechanical projection, allowing high yields to the appliers. Its low retraction and high adherence to the support ensures an exceptional performance and great durability, adding an important contribution in terms of thermal efficiency, a safe performance facing fire and greatly improved acoustic properties.

The reduction of energy consumption, the increasing in housing thermal comfort, the improved indoor air quality, because it is not anergenic, and the fact that they are formed by natural renewable materials are strong arguments to assert itself positively in its contribution to sustainability in construction.

This new product solves the problems existing in the solutions mentioned above of applying on work site, with very important advantages in terms of efficiency, and in terms of thermal conductivity and acoustic properties.

It is a first object of the invention a lightweight mortar incorporating cork granulate, which comprises the following components, in percentage in weight of the components relatively to the total weight of the composition:
a) 20 to 55% of limestone or siliceous aggregate;
b) 30 to 70% of hydraulic binders;
c) 5 to 15% of cork granulate;
d) 0.5 to 10% of a hydroxide selected between calcium hydroxide and magnesium hydroxide;
e) 0.05 to 1.0% of a cellulose derivative;
f) 1 to 5% of re-dispersible powder;
g) 0.01 to 2% of a hydrophobic powder;
h) 0.005 to 0.5% of an air introducing agent; and
k) 0 to 0.5% of an air introducing and retraction control agent.

The component a) is usually a limestone aggregate.

The component b) is, preferably, selected from Portland cement, hydraulic lime or their mixtures with fly ashes and blast furnace slag;

Preferably the hydroxide used as component d) is calcium hydroxide.

The preferred cellulose derivative used as component e) is a modified methyl-cellulose.

The re-dispersible powder used as component f) is preferably selected from acrylic resins, polyvinyl derivative, or mixtures thereof.

In general, the hydrophobic powder referred to as component g) is calcium or zinc stearate.

The air introducing agent used as component h) is preferably an alpha-olefinsulfonate.

At last, the most commonly employed air introducing and retraction control agent, if any, referred to as component k) is aluminum powder.

### Experimental Part

The following Examples are intended to illustrate the invention and are not in any way limiting the scope of protection thereof.

### Example 1

### Preparation of 1000g of thermal mortar according to the invention

**Mortar's composition:**

| Component | Quantity (g) |
|---|---|
| Limestone aggregate | 334.6 |
| Portland cement | 500.0 |
| Cork black re-granulate | 100.0 |
| Calcium hydroxide | 40.0 |
| Modified methyl-cellulose | 3.0 |
| Copolymer of vinyl acetate | 20.0 |
| Calcium stearate | 2.0 |
| Sodium alpha-olefinsulfonate | 0.2 |
| Aluminum powder | 0.2 |
| | Total 1000.0 |

The mortar obtained has a density of 910 kg/m³ and a thermal conductivity of 0.23 W/m.°C.

This mortar is mixed and packed in dry condition, its mixture with water occurs at the moment of application on the wall, carried out in a projecting machine with automatic dosage of both components, dry mortar and water.

### Characterization tests

In laboratory, a battery of tests was performed leading to the results summarized in Table 1.

**Table 1 - Summary of physical and mechanical characteristics determined in test for thermal mortar 1**

| **Characteristics** | **Units** | **Test reference** | **Test values** | **Category** |
|---|---|---|---|---|
| Consistency | mm | EN1015-3 | 136 | - |
| Density (hardened product) | kg/m³ | EN1015-10 | 910 | Light |
| Permeability Vapor diffusion to water vapor coefficient (µ) | - | EN1015-19 | 0,5 | - |
| Thermal conductivity | W/m.°C | EN12667 | 0.23 | - |
| Resistance to compression | N/mm² | EN1015-11 | 9.80 | CSIV |
| Resistance to traction by bending | N/mm² | EN1015-11 | 3.30 | - |
| Retraction | mm/m | EN12808-4 | 3.17 | - |
| Specific heat | J/g·K | - | 1.199 | - |
| Porosity and pore diameter | % | ISO 15901-1 | 46.63 | - |

The obtained results allow us to conclude that the formulated mortar is a lightweight mortar according to the applicable standard, EN 998-1.

### Example 2

### Preparation of 1000 g of thermal mortar according to the invention

**Mortar's composition:**

| Component | Quantity (g) |
|---|---|
| Limestone aggregate | 505.7 |
| Portland cement | 360.0 |
| Cork black re-granulate | 100.0 |
| Calcium hydroxide | 20.0 |
| Modified methyl-cellulose | 2.2 |
| Copolymer of vinyl acetate | 10.0 |
| Calcium stearate | 2.0 |
| Sodium alpha-olefinsulfonate | 0.1 |
| | Total 1000.0 |

The mortar obtained has a density of 860 kg/m³ and a thermal conductivity of 0.13 W/m.°C.

This mortar is mixed and packed in dry condition, its mixture with water occurs at the moment of application which may be manual or automatic.

### Characterization tests

In laboratory, a battery of tests was performed leading to the results summarized in Table 2.

**Table 2 - Summary of physical and mechanical characteristics determined in test for thermal mortar 2**

| **Characteristics** | **Units** | **Test reference** | **Test values** | **Category** |
|---|---|---|---|---|
| Consistency | mm | EN1015-3 | 126 | - |
| Density (hardened product) | kg/m³ | EN1015-10 | 860 | Light |
| Permeability Vapor diffusion to water vapor coefficient (µ) | - | EN1015-19 | 0,1 | - |
| Thermal conductivity | W/m.°C | EN12667 | 0.13 | - |
| Retraction | mm/m | EN12808-4 | 2.68 | - |
| Resistance to compression | N/mm² | EN1015-11 | 3.50 | M 2,5 |
| Resistance to traction by bending | N/mm² | EN1015-11 | 1.50 | - |

According to the specification standard EN998-2, this mortar may be classified as masonry mortar, Category M2,5. The determined resistance to compression and, 5 according to Eurocode 6, can be used to execute structural masonry joints.

This mortar's thermal conductivity presents a very low value, which contributes greatly to reduce the thermal conductivity of the masonry solution.

### Example 3

### Preparation of 1000g of thermal mortar according to the invention

**Mortar's composition:**

| Component | Quantity (g) |
|---|---|
| Limestone aggregate | 284.6 |
| Natural hydraulic lime | 550.0 |
| Cork black re-granulate | 100.0 |
| Calcium hydroxide | 40.0 |
| Modified methyl-cellulose | 3.0 |
| Copolymer of vinyl acetate | 20.0 |
| Calcium stearate | 2.0 |
| Sodium alpha-olefinsulfonate | 0.2 |
| Aluminum powder | 0.2 |
| | Total 1000.0 |

The mortar obtained has a density of 890 kg/m³ and a thermal conductivity of 0.22 W/m.°C.

This mortar is mixed and packed in dry condition, its mixture with water occurs at the moment of application on the wall, carried out in a projecting machine with automatic dosage of both components, dry mortar and water.

### Characterization tests

In laboratory, a battery of tests was performed leading to the results summarized in Table 3.

**Table 3 - Summary of physical and mechanical characteristics determined in test for thermal mortar 3**

| **Characteristics** | **Units** | **Test reference** | **Test values** | **Category** |
|---|---|---|---|---|
| Consistency | mm | EN1015-3 | 122 | - |
| Density (hardened product) | kg/m³ | EN1015-10 | 890 | Light |
| Permeability Vapor diffusion to water vapor coefficient (µ) | - | EN1015-19 | 0,4 | - |
| Thermal conductivity | W/m.°C | EN12667 | 0.22 | - |
| Resistance to compression | N/mm² | EN1015-11 | 3.6 | - |
| Resistance to traction by bending | N/mm² | EN1015-11 | 1.2 | - |
| Retraction | mm/m | EN12808-4 | 3.29 | - |

The obtained results allow us to conclude that the formulated mortar is a lightweight mortar according to the applicable standard, EN 998-1.

## Claims

1. Lightweight mortar incorporating cork granulate, **characterized in that** it comprises the following components, in percentage in weight of the components relatively to the total weight of the composition:
a) 20 to 55% of limestone or siliceous aggregate;
b) 30 to 70% of hydraulic binders;
c) 5 to 15% of cork granulate;
d) 0.5 to 10% of a hydroxide selected between calcium hydroxide and magnesium hydroxide;
e) 0.05 to 1.0% of a cellulose derivative;
f) 1 to 5% of re-dispersible powder;
g) 0.01 to 2% of a hydrophobic powder;
h) 0.005 to 0.5% of an air introducing agent; and
k) 0 to 0.5% of an air introducing and retraction control agent.

2. Mortar according to claim 1, **characterized in that** component a) is a limestone aggregate.

3. Mortar according to claim 1 or 2, **characterized in that** component b) is selected from Portland cement, hydraulic lime or their mixtures with fly ashes and blast furnace slag.

4. Mortar according to any one of claims 1 to 3, **characterized in that** the hydroxide used as component d) is calcium hydroxide.

5. Mortar according to any one of claims 1 to 4, **characterized in that** the cellulose derivative used as component e) is a modified methyl-cellulose.

6. Mortar according to any one of claims 1 to 5, **characterized in that** the re-dispersible powder used as component f) is selected from acrylic resins, polyvinyl derivative, or mixtures thereof.

7. Mortar according to any one of claims 1 to 6, **characterized in that** the hydrophobic powder used as component g) is calcium or zinc stearate.

8. Mortar according to any one of claims 1 to 7, **characterized in that** the air introducing agent used as component h) is an alpha-olefinsulfonate.

9. Mortar according to any one of claims 1 to 8, **characterized in that** the air introducing and retraction control agent used as component k) is aluminum powder.

## Patentansprüche

1. Leichtgewichtiger Mörtel mit eingemeindendem Korkgranulat, **dadurch gekennzeichnet, dass** es die folgenden Komponenten enthält, Gewichtsprozent der Komponenten verhältnismäßig zu dem Gesamtgewicht der Komposition:
a) 20 bis 55% Kalkstein oder einem silikatischem Aggregat;
b) 30 bis 70% hydraulische Bindemittel;
c) 5 bis 15% Korkgranulat;
d) 0,5 bis 10% eines Hydroxids, ausgewählt zwischen Calciumhydroxid und Magnesiumhydroxid;
e) 0,05 bis 1,0% Cellulosederivat;
f) 1 bis 5% re-dispergiebaren Pulvers;
g) 0,01 bis 2% hydrophoben Pulvers;
h) 0,005 bis 0,5% eines lufteinführendem Mittels; und
k) 0 bis 0,5% eines lufteinführendem und einziehen Kontrollmittel.

2. Mörtel nach Anspruch 1, **dadurch gekennzeichnet, dass** Komponent a) ein Kalksteinaggregat ist.

3. Mörtel nach Anspruch 1 oder 2, **dadurch gekennzeichnet, dass** Komponent b) aus Portlandzement, Wasserkalk oder deren Mischungen mit Flugasche und Hochofenschlacke gewählt wird.

4. Mörtel nach jedem der Ansprüche 1-3, **dadurch gekennzeichnet, dass** das in Komponent d) verwendete Hyrdoxid, Calciumhydroxid ist.

5. Mörtel nach einem der Ansprüche 1-4, **dadurch gekennzeichnet, dass** das in Komponent e) verwendete Cellulosederivat, eine modifizierte Methylcellulose ist.

6. Mörtel nach einem der Ansprüche 1-5, **dadurch gekennzeichnet, dass** das in Komponent f) verwendete redispergiebare Pulver aus Acrylharz, Polyvinylderivat oder einer Mischung dieser gewählt wird.

7. Mörtel nach einem der Ansprüche 1-6, **dadurch gekennzeichnet, dass** das in Komponent g) verwendete hydrophobe Pulver, Calcium oder Zinkstearat ist.

8. Mörtel nach einem der Ansprüche 1-7, **dadurch gekennzeichnet, dass** das in Komponent h) verwendete lufteinführende Mittel ein Alphaolefinsulfonat ist.

9. Mörtel nach einem der Ansprüche 1-8, **dadurch gekennzeichnet, dass** das in Komponent i) verwendete lufteinführende und einziehen Kontrollmittel, Aluminiumpulver ist.

## Revendications

1. Mortier léger incorporant des granulés de liège, **caractérisé en ce qu'**il comprend les composants suivants, où les pourcentages en poids des composants par rapport au poids total de la composition sont :
a) 20 à 55% d'un agrégat calcaire ou siliceux ;
b) 30 à 70% de liants hydrauliques ;
c) 5 à 15% de granulés de liège ;
d) 0,5 à 10% d'un hydroxyde choisi entre l'hydroxyde de calcium et l'hydroxyde de magnésium ;
e) 0,05 à 1% d'un dérivé de cellulose ;
f) 1 à 5% d'une poudre redispersible ;
g) 0,01 à 2% d'une poudre hydrophobe ;
h) 0,005 à 0, 5% d'un agent d'introduction d'air ; et
k) 0 à 0,5% d'un agent d'introduction d'air et de contrôle de rétraction.

2. Mortier selon la revendication 1, caractérisé en ce le composant a) est un agrégat calcaire.

3. Mortier selon les revendications 1 ou 2, **caractérisé en ce que** le composant b) est choisi parmi le ciment Portland, la chaux hydraulique ou des mélanges de ceux-ci avec des cendres volantes ou du laitier de haut fourneau.

4. Mortier selon l'une quelconque des revendications 1 à 3, **caractérisé en ce que** l'hydroxyde utilisé comme composant d) est l'hydroxyde de calcium.

5. Mortier selon l'une quelconque des revendications 1 à 4, **caractérisé en ce que** le dérivé de cellulose utilisé comme composant e) est une méthylcellulose modifiée.

6. Mortier selon l'une quelconque des revendications 1 à 5, **caractérisé en ce que** la poudre redispersible utilisée comme composant f) est choisi parmi des résines acryliques, un dérivé polyvinylique ou des mélanges de ceux-ci.

7. Mortier selon l'une quelconque des revendications 1 à 6, **caractérisé en ce que** la poudre hydrophobe utilisée comme composant g) est le stéarate de calcium ou de zinc.

8. Mortier selon l'une quelconque des revendications 1 à 7, **caractérisé en ce que** l'agent d'introduction d'air utilisé comme composant h) est un sulfonate d'alpha-oléfine.

9. Mortier selon l'une quelconque des revendications 1 à 8, **caractérisé en ce que** l'agent d'introduction d'air et de contrôle de rétraction utilisé comme composant k) est la poudre d'aluminium.
